# EUROPEAN PATENT SPECIFICATION

(11) **EP 1 471 265 B1**
(45) Date of publication and mention of the grant of the patent: **04.10.2006**
(21) Application number: 04007737.2
(22) Date of filing: 31.03.2004
(51) Int. Cl.: F16B 13/00, F16B 13/06

(54) **Wall anchor for a screw, and assembly constituted by such a wall anchor and a screw**
Wanddübel für eine Schraube und die Anordnung, die durch solch einen Wanddübel und eine Schraube festgesetzt wird.
Ancre de mur pour une vis, et assemblage constituée par une telle ancre de mur et une vis

(30) Priority: 24.04.2003 FR 0305032
(43) Date of publication of application: 27.10.2004
(73) Proprietor: Black & Decker Inc., Newark, Delaware 19711 (US)
(72) Inventor: Anquetin, Robert, 91690 Fontaine La Riviere (FR)
(74) Representative: Bell, Ian Stephen

(56) References cited:
- DE-U- 20 119 803
- FR-A- 2 830 295
- US-A- 5 690 454

## Description

The present invention concerns a wall anchor for a screw, of the type having a longitudinal axis and comprising, integrally:
- two shafts having a respective generally tubular form of revolution about the axis and mutually opposed longitudinally, in the form of:
   · a head shaft bounding internally a free coaxial passage for a screw rod of the screw and bearing externally a transverse, longitudinally end, collar, and
   · a screw nut shaft having on the inside a coaxial internal thread capable of co-operating with said screw rod and bearing at its outer periphery a plurality of longitudinally end, approximately longitudinal teeth, preferably identical to one another, distributed angularly about the axis, preferably regularly, and forming a longitudinal projection with respect to the screw nut shaft, longitudinally opposite to the head shaft with respect to the screw nut shaft, and
- a plurality of approximately longitudinal small bars, preferably identical to one another, distributed angularly about the axis, preferably regularly, disposed between the head shaft and screw nut shaft, which they mutually connect, and plastically flexible in a direction away from the axis, in order to pass from an initial configuration to an anchoring configuration of the wall anchor.

Such a wall anchor, advantageously constituted essentially by upsetting and bending a single metal strip, is described in FR-B 2 640 704 and in EP-B 0 378 907, in an embodiment in which it is intended to be used, in the manner of a wood bit of the type known by the name "centre bit", for drilling a partition in which it is to be anchored, being driven in rotation on itself about its axis with respect to the partition, for example by means of a screwdriver acting on a head of the screw, the screw rod of which is screwed into the screw nut shaft and which head is positioned so as to bear longitudinally on the collar of the head shaft of the wall anchor.

To this end, the teeth of the known wall anchor are oriented parallel to its axis and have a respective cutting edge inclined thereto, and the screw rod of the screw is extended, longitudinally opposite to the screw head, by an axial point which forms with respect to the screw nut shaft a projection greater than that of the teeth in order to engage in the partition before the latter and thus ensure the fixity of the common axis of the wall anchor and of the screw when the teeth then come into contact with the partition and progressively penetrate into the latter under the action of the rotation imparted to the wall anchor about the axis.

Such guiding, ensuring the fixity of the axis of the wall anchor and of the screw with respect to the partition during the drilling of the latter by the teeth of the screw nut shaft, is indispensable but the presence, for this purpose, of the point extending the screw rod of the screw constitutes a drawback in so far as it is necessary, in order to accommodate this point, to dispose within or at the back of the partition a much larger clearance, in the direction of the common axis of the wall anchor and the screw, than the clearance necessary for accommodating the screw rod, devoid of such a point, of the standard screws used in association with the more conventional wall anchors, which are devoid of drilling teeth and which are anchored in a hole previously made in the partition by means of a conventional drill bit, independent of the wall anchor.

Another drawback of the necessary presence of the guide point in the extension of the screw rod of the screw lies in the impossibility of using a wall anchor produced according to the teachings of FR-B 2 640 704 and EP-B 0 378 907 in association with standard screws, the screw rod of which is devoid of any guide point, if it is desired to benefit from the possibility of drilling the partition by means of the wall anchor itself. The use of the known wall anchor requires, in effect, the manufacture and holding in stock of specifically adapted screws, equipped with the guide point, thereby creating constraints and additional manufacturing and storage costs, even more so since screws which are thus specifically adapted require more material and are bulkier than the standard screws, with identical dimensions of the actual screw rod.

Prior art document US 5,690,454 discloses a wall anchor according to the pre-characterising clause of claim 1.

The aim of the present invention is to remedy these drawbacks and, to this end, the present invention proposes a wall anchor for a screw, of the type having a longitudinal axis and comprising, integrally:
two shafts having a respective generally tubular form of revolution about the axis and mutually opposed longitudinally, in the form of:
   a head shaft bounding internally a free coaxial passage for a screw rod of the screw and bearing externally a transverse, longitudinally end, collar; and
   a screw nut shaft having on the inside a coaxial internal screw thread capable of co-operating with said screw rod and bearing at its outer periphery a plurality of longitudinally end, approximately longitudinal, teeth distributed angularly about the axis and forming a longitudinal projection with respect to the screw nut shaft, longitudinally opposite to the head shaft with respect to the screw nut shaft, wherein each tooth converges towards the axis, in a longitudinal direction going from the head shaft towards the screw nut shaft, and has a generally triangular shape defined by a side for connection to the screw nut shaft and by two free sides, such that the teeth together define a point symmetrical with respect to the axis, projecting longitudinally on the screw nut shaft in said longitudinal direction; and
   a plurality of approximately longitudinal small bars distributed angularly about the axis disposed between the head shaft and screw nut shaft, which they mutually connect, and plastically flexible in a direction away from the axis, in order to pass from an initial configuration to an anchoring configuration of the wall anchor,
   characterised in that the wall anchor is made of pressed metal strip and in that each tooth is concave between said free sides whereby each tooth is curved towards the axis.

An expert in the field will easily understand that, in such a wall anchor according to the invention, it is the teeth of the screw nut shaft themselves which constitute a centring point capable of ensuring the fixity of the axis of the wall anchor with respect to a partition in which it is wished to set it, whether the wall anchor is then associated with a screw or not.

Thus, without any significant extra manufacturing cost compared with a wall anchor of the type described in FR-B 2 640 704 and EP-B 0 378 907, a wall anchor according to the invention makes it possible to use standard screws, that is to say, devoid of a guide point in the extension of their screw rod, that is to say, does not make it necessary on the one hand to manufacture and keep in stock specifically adapted screws, and on the other hand to dispose within or at the back of the partition as much space as when it is necessary to accommodate there the guide point of the screw necessarily used in association with such a previously known wall anchor.

Moreover, owing to the point defined by the teeth of the head shaft, a wall anchor according to the invention, if the material of which it is made lends itself thereto, may be used to perforate the partition even without relative rotation, that is to say, by simply applying a longitudinal thrust to the head shaft after the point of the screw nut shaft has been placed in contact with the partition, which may be done for example with a hammer. The wall anchor according to the invention then behaves with regard to the partition like a simple nail as it penetrates into the partition.

However, with a view to setting a wall anchor according to the invention in a partition wherein the material of which it is made does not lend itself to such a method of perforation, or in order to render more accurate and more reproducible the geometry of the hole made by the wall anchor itself in the partition, with a view to its anchorage therein, an embodiment of the wall anchor according to the invention is preferred which allows it to be used not only like a nail but also like a drill bit, that is to say, in such a way that it progressively drills its receiving hole in the partition by rotation about its axis after its point has been placed against the partition.

To this end, according to a preferred embodiment of a wall anchor according to the invention, at least one of the free sides of each tooth, turned in a specific circumferential direction, identical from one tooth to another, is in the shape of a cutting edge, thereby making it possible to drill the receiving hole for the wall anchor by rotation of the latter about its axis in the aforesaid circumferential direction.

According to an even more preferred embodiment, the two free sides of each tooth are in the respective shape of a cutting edge, thereby making it possible to carry out drilling by rotation of the wall anchor in one direction or the other.

To allow the appropriate rotational movement to be imparted to the wall anchor, provision is preferably made for the head shaft to have an indentation for co-operating with a screwdriver around its free coaxial passage, thereby making it possible to carry out drilling without having to engage a screw in the wall anchor.

It is also possible, of course, to act for this purpose on the wall anchor by acting on the transverse head of a screw, the screw rod of which is engaged with the internal thread of the screw nut shaft and the head of which bears against the collar of the head shaft in the longitudinal direction going from the head shaft towards the screw nut shaft. The screw is then selected such that the screw rod has, between an end for connection to the screw head and a free end longitudinally opposed to said head, a longitudinal dimension such that its free end is accommodated between the teeth or set back longitudinally with respect to the latter but in engagement with the internal thread of the screw nut shaft when the head of the screw bears against the collar and while the small bars of the wall anchor exhibit their initial configuration, in order to avoid any risk of accidental spreading of the teeth by the free end of the screw. Then, the rotation of the assembly thus constituted by the wall anchor and the screw, about their then common axis, with respect to the partition, should preferably take place in a circumferential direction corresponding to the direction of screwing of the screw in the wall anchor. If only one of the free sides of each tooth is in the shape of a cutting edge, it should in this case be that one of the free sides which is turned in the same circumferential screwing direction.

Such an embodiment of the wall anchor, permitting drilling by rotation thereof about its axis with respect to the partition, naturally remains compatible with setting in the partition like a nail, if the material of which the partition is made lends itself thereto.

With a view to facilitating the engagement of the cutting edges of the teeth on the constituent material and, in the case where the receiving hole for the wall anchor in the partition is drilled by relative rotation about the axis of the wall anchor, to facilitating the release of the material removed from the partition, each tooth is concave between its free sides.

Once the wall anchor is fully engaged in the partition, that is to say, when the transverse collar of its head shaft rests flat against the partition, the plastic flexion of the bars mutually connecting the head shaft and screw nut shaft, that is to say, the passage from the initial configuration to the anchoring configuration of the wall anchor, may take place conventionally by rotation of the screw in the direction of screwing with respect to the wall anchor about the then common axis of the wall anchor and the screw, thereby progressively bringing the screw nut shaft closer, longitudinally, to the head shaft.

It is of course necessary that then, the point which is formed by the teeth and which, initially covers the internal thread of the screw nut shaft, at a certain longitudinal distance therefrom, does not form an obstacle, taking into account the fact that the progressive longitudinal displacement of the screw nut shaft in relation to the head shaft manifests itself by an ever greater longitudinal projection of the free end of the screw rod of the screw with respect to the screw nut shaft.

To this end, provision may indeed be made for relatively large longitudinal sizing of the teeth, but such a solution seems not very satisfactory in so far as it is carried out either to the detriment of the possible longitudinal travel of the screw nut shaft with respect to the head shaft, that is to say of the flexing amplitude of the bars into the anchoring configuration, or an excessive overall longitudinal dimension of the teeth, necessitating a large clearance within or at the back of the partition to accommodate them.

An embodiment of the wall anchor according to the invention is consequently preferred in which the side for connection of each tooth to the screw nut shaft constitutes a privileged zone of flexing by plastic deformation such that each tooth is capable of pivoting about the respective connection side, with respect to the screw nut shaft, in a direction away from the axis, in particular under a thrust exerted by the screw rod of the screw, i.e. more precisely the free end of the screw rod, in the longitudinal direction going from the head shaft towards the screw nut shaft.

Thus, even if the longitudinal dimensions of the teeth are limited to what is strictly necessary to define a sufficiently marked point to ensure the centring of the wall anchor during its penetration into the partition, the teeth do not constitute any obstacle to the further passage of the free end of the screw rod, that is to say, to the longitudinal travel of approach of the screw nut shaft with respect to the head shaft and consequently to the transverse amplitude of the flexing of the bars into the anchoring configuration.

It will be observed that, in so far as a wall anchor according to the invention may be associated with a standard screw, that is to say, devoid of a centring point, on the one hand, and in so far as the presence of the screw during the setting of the wall anchor according to the invention is not indispensable, the setting is carried out in the manner of a nail or by relative rotation about the axis of the wall anchor, and on condition that the aforesaid indentation is provided for co-operation with a screwdriver around the free axial passage of nut shaft, a wall anchor according to the invention may be marketed not only in the form of an assembly with a screw sized preferably as indicated previously, but also alone, that is to say, without a screw, being suitable for being associated with a screw of any desired length between the free end of its screw rod and the end for the screw rod to the screw head. This possibility facilitates considerably the holding of stocks and avoids the public having to acquire, at the same time as the wall anchor, screws which will indeed be suitable for use with the latter but do not necessarily fulfil every need and must sometimes be replaced, by the user himself, by screws of a different length acquired in addition.

As in the prior art, each tooth may of course be advantageously produced in one piece with the screw nut shaft and, in particular, the wall anchor may be formed at least basically from a single pressed metal strip, according to a manufacturing process little different from that of the wall anchors described in FR-B 2 640 704 and EP-B 0 378 907, itself directly inspired by the method described in FR-B 2 546 989 in relation to wall anchors determined by teeth, except that it is necessary to provide the teeth with the triangular shape corresponding to that of the teeth of a wall anchor according to the invention, and to insert between the steps of the known method a step of forming said teeth, which does not present any particular difficulty for an expert in the field.

Similarly, the wall anchor according to the invention may in addition have any arrangement known per se, in particular with regard to the shape of the bars which, for example, may conform to the teachings of FR-B 2 640 704 and EP-B 0 378 907, or to those of FR-B 2 546 989, or even to those of French Patent Application No. 02 02197, not yet published, of the Applicant, these examples being in no way limiting.

Other features and advantages of a wall anchor according to the invention, or of an assembly combining such a wall anchor and a screw, will be become clear from the following description, relating to a non-limiting example, and also from the appended drawings which accompany the description.
Figure 1 shows a view, in side elevation, of a wall anchor according to the invention.
Figures 2 and 3 show end views of the wall anchor, in the opposite directions marked respectively II and III in Figure 1.
Figure 4 shows a view in side elevation of the same wall anchor in an opposite direction from the viewing direction of Figure 1.
Figure 5 illustrates the main modifications applied to the method of manufacture of a wall anchor of the type concerned in the present invention, starting from a metal strip, described in FR-B 2 546 989, for producing a wall anchor according to the invention, the metal strip being seen in plan and three consecutive steps of the method being illustrated on a respective wall anchor blank.
Figures 6 to 8 illustrate three different methods of introducing a wall anchor according to the invention into a partition, with the formation of a receiving hole for the wall anchor in the partition by the wall anchor itself, the wall anchor being seen in side elevation and the partition in section.
Figure 9 shows, in a similar view, the wall anchor at the end of introduction into the partition by one or other of the means illustrated respectively in Figures 6 to 8, the wall anchor still, however, being in its initial configuration.
Figure 10 shows, in a similar view, the start of the screwing of a screw for fixing an object in the wall anchor still exhibiting its initial configuration.
Figure 11 shows, in a similar view, a final step of the screwing operation, with the wall anchor exhibiting its configuration for anchoring in the partition.

Although, except for the presence and the shape of the teeth characteristic of the present invention, the wall anchor illustrated in the figures exhibits the features of the wall anchor described in FR-B 2 546 989, it is clearly understood that the arrangements characteristic of the present invention could be adopted in the case of different wall anchors, and in particular in the case of a wall anchor of the type described in French Patent Application No. 02 02197 filed on the 21st February 2002 by the Applicant and not published.

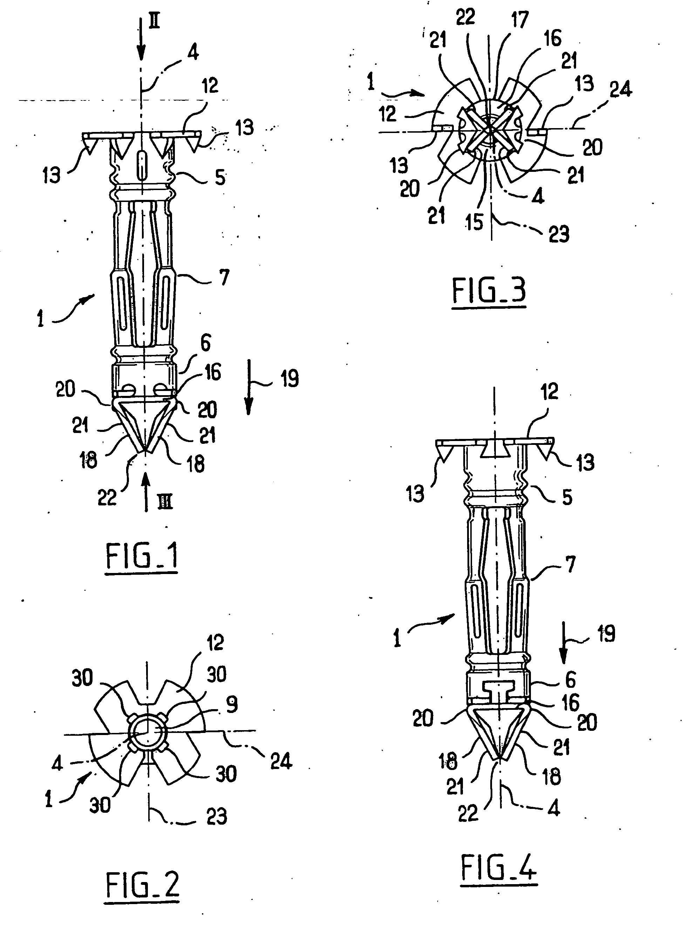

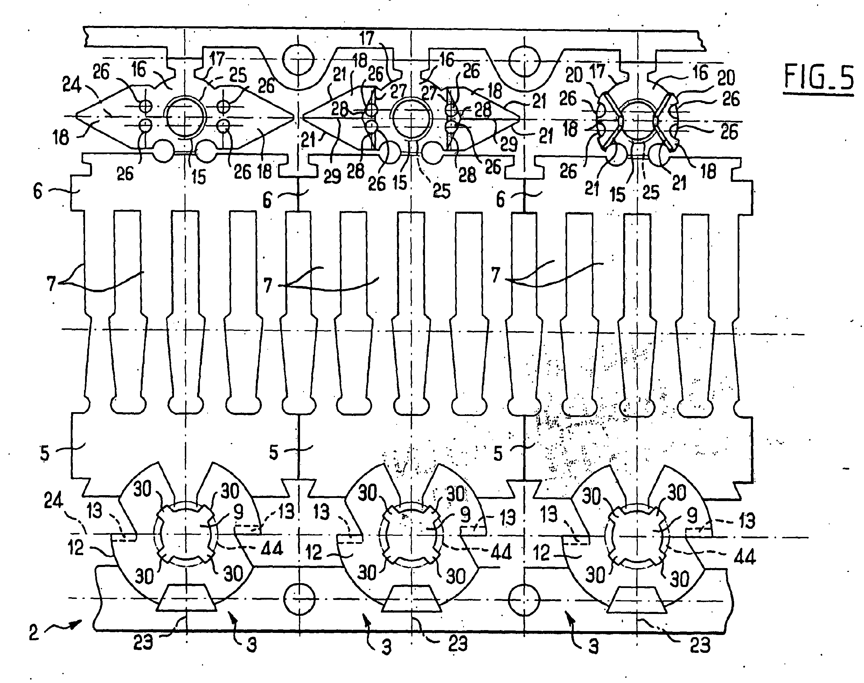

Reference will be made firstly to Figures 1 to 4, wherein a wall anchor 1 according to the invention is illustrated in which will be found identically or practically identically the different parts of the wall anchor described in FR-B 2 546 989 and which, like the latter, is advantageously produced in one piece by pressing, winding and folding a metal strip 2, a section of which is illustrated in Figure 5 in relation to three consecutive states, characteristic of the production of a wall anchor according to the invention from such a strip 2, of a blank 3 for a wall anchor 1. For reasons of simplicity, the same numerical references will be used to designate the different parts of the wall anchor 1 according to the invention and the corresponding parts of the blank 3.

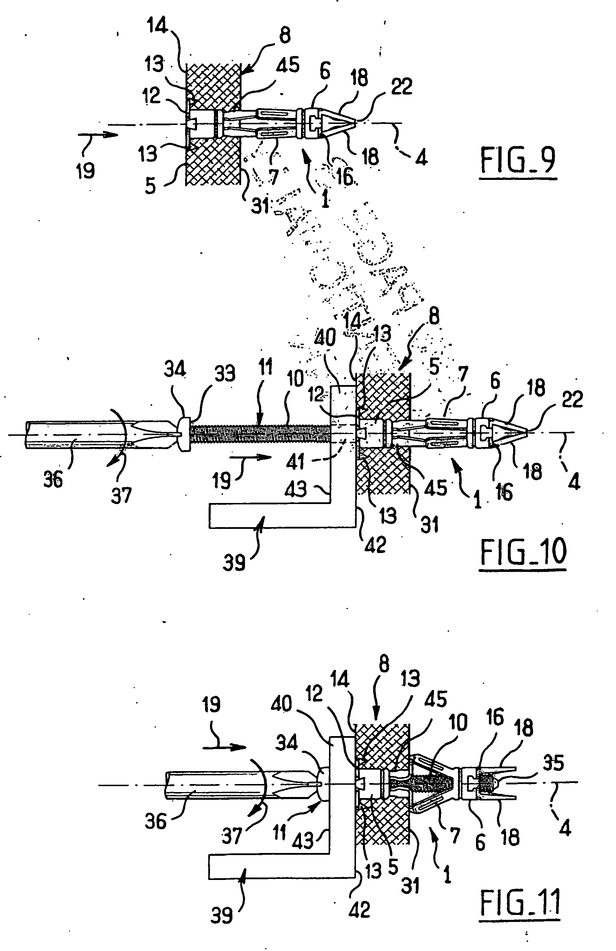

Thus, the wall anchor 1 according to the invention, having a longitudinal axis 4 of general symmetry, comprises like the wall anchor described in FR-B 2 546 989:
- a head shaft 5 and a screw nut shaft 6, each in the form of a tubular sleeve of revolution about the axis 4 and mutually spaced longitudinally to define two end zones, mutually opposed longitudinally, of the wall anchor 1, and
- a plurality of approximately longitudinal small bars 7, identical to one another and regularly distributed angularly about the axis 4 in this preferred example, which bars 7 are disposed between the head shaft 5 and screw nut shaft 6 and mutually connect them, in one piece, and are plastically flexible in a direction away from the axis 4 in order to pass from an initial configuration, in which the bars are illustrated in Figures 1 to 4 and 6 to 10, to a configuration for anchoring the wall anchor 1 in a partition 8, which anchoring configuration is illustrated in Figure 11.

To facilitate this passage from the initial configuration to the anchoring configuration of the wall anchor 1, each bar 7 is slightly further from the axis 4 in a longitudinally median zone than at its connection respectively to either the head shaft 5 or the screw nut shaft 6, in the initial configuration, as is also the case for the bars of the wall anchor described in FR-B 2 546 989. The bars 7 are four in number in the example illustrated in Figures 1 to 4, instead of being five in number as in the case of the wall anchor described and illustrated in FR-B 2 546 989, but the number of bars 7, like their shape, is irrespective with regard to the present invention.

As in the case of the wall anchor described in FR-B 2 546 989, the head shaft 5 bounds internally a free coaxial passage 9 for a screw rod 10 of a screw 11 co-operating with the wall anchor 1, under conditions which will be described hereinafter and it bears integrally, by being produced in one piece, a flat transverse collar 12, which defines one of the longitudinally end zones of the wall anchor 1. The collar 12, of generally annular shape, surrounds the coaxial passage 9 and forms a projection about the shaft 5 in a direction away from the axis 4 that is to say, towards the outside of the shaft 5, around which it has two longitudinal teeth 13, symmetrical to each other with respect to the axis 4 and produced by pressing of the collar 12, to permit the anchorage of the collar in a face 14 of the partition 8 by means of which the introduction and blind anchorage therein of the wall anchor according to the invention 1 is effected. The collar 12 is itself formed by a corresponding portion of the blank 3 for the wall anchor 1, this portion being initially cut out flat with the rest of the blank 3, then folded back on a corresponding end of the head shaft 5, turned longitudinally opposite to the bars 7, after winding of the portions of the blank 3 corresponding respectively to the head shaft 5, to the screw nut shaft 6 and to the bars 7 about an axis which becomes the longitudinal axis 4 of the wall anchor 1, under the conditions described in FR-B 2 546 989.

The screw nut shaft 6 itself has internally, in the same way as that of the wall anchors described in FR-B 2 546 989, a coaxial internal thread 15 capable of co-operating with the screw rod 10 of the screw 11, which coaxial internal thread 15 is provided in a flat annular cap 16, perpendicular to the axis 4, produced in one piece with the screw nut shaft 6 and constituting a portion of the flat blank 3, which portion is turned down flat on an end of the screw nut shaft 6 located longitudinally opposite to the bars 7 after the aforesaid winding of the portions of the blank 3 corresponding to the head shaft 5 and screw nut shaft 6 and to the bars 7 about the axis 4, under the conditions described in FR-B 2 546 989.

The collar 12 and the cap 16 remain firmly connected respectively to the head shaft 5 and to the screw nut shaft 6, on one side of the axis 4, by a respective tongue, not provided with a reference number, issuing from the blank 3, and are firmly connected respectively to the head shaft 5 and the screw nut shaft 6, on the other side of the axis 4, by the engagement of a respect dovetail tongue or the like, also produced in one piece with them, in a corresponding seat provided respectively in the head shaft 5 and in the screw nut shaft 6.

For a more complete description of the different parts of the wall anchor according to the invention 1 which have just been described, reference will be made to FR-B 2 546 989, and also to the corresponding product marketed under the registered trademark "MOLLY" by the Applicant and its subsidiaries.

However, these features common to the wall anchor, which are described in FR-B 2 546 989, are in themselves irrespective with regard to the present invention and the general shape of the different parts of the wall anchor 1 which have just been described could be different from that described in FR-B 2 546 989, without thereby departing from the framework of the present invention, and this may be particularly the case as far as the bars 7 are concerned.

In a manner which is itself described in FR-B 2 640 704 and EP-B 0 378 907, the cap 16 bears at its outer periphery 17, which is located in the direct longitudinal extension of the outer periphery of the screw nut shaft 6 at the end thereof longitudinally opposed to the bars 7 and may therefore be considered as a longitudinally end zone of the outer periphery of the screw nut shaft 6, two teeth 18 mutually symmetrical with respect to the axis 4, forming a longitudinal projection with respect to the cap 16 and to the screw nut shaft 6, longitudinally opposite to the bars 7, the head shaft 5 and the collar 12, to define the end of the wall anchor 1 longitudinally opposed to its end defined by the collar 12. The two teeth 18, which could be replaced by a different number of teeth 18, preferably identical to one another and regularly distributed angularly about the axis 4, are integral with the cap 16, in respectively corresponding zones of the outer periphery 17 of the latter, by being produced in one piece, and come from the same flat blank 3 as the rest of the wall anchor according to the invention 1, in the exemplary embodiment thereof which has been illustrated, but they could also constitute pieces rigidly added on to the screw nut shaft 6, just as the rest of the wall anchor 1 could consist of a plurality of components rigidly assembled with one another

In a manner characteristic of the present invention, each of the teeth 18 converges towards the axis 4 in a longitudinal direction 19 going from the head shaft 5 towards the screw nut shaft 6 and corresponding to the direction of introduction of the wall anchor according to the invention 1 into the partition 8 through the face 14 of the latter, and each of the teeth 18 has a generally triangular shape defined by an approximately rectilinear side 20 for integral connection with the outer periphery 17 of the cap 16, that is to say, with the screw nut shaft 6 by way of the cap 16, and by two free sides 21, substantially rectilinear, identical to one another and of -opposed inclination with respect to the connection sides 20. The two teeth 18 bear mutually, on the axis 4, by mutual connecting corners of the respective free sides 21, although the teeth 18 together define, for the wall anchor 1, a longitudinally end point 22 symmetrical with respect to the axis 4 and forming a longitudinal projection on the screw nut shaft 6 in the direction 19.

More precisely, if a middle longitudinal plane 23 is considered which passes through the axis 4 and which constitutes a middle plane of symmetry respectively for the tongue of material effecting the connection of the collar 12 in one piece with the head shaft 5, for the dovetail tongue or the like effecting their mutual assembly diametrically opposed with respect to the axis 4, for the tongue effecting the connection of the cap 16 in one piece with the screw nut shaft 6 and for the dovetail tongue or the like effecting their mutual assembly diametrically opposed with respect to the axis 4, the two teeth 18 are mutually symmetrical with respect to the plane 23, while they are respectively symmetrical with respect to another longitudinal middle plane 24 which cuts the middle longitudinal plane 23 perpendicularly along the axis 4 and along which the two teeth 13 are disposed.

In this preferred embodiment, the two free sides 21 of each tooth 18 are in the shape of a cutting edge, capable of attacking the material constituting the partition 8 and, between these two free sides 21, each tooth 18 is concave, that is to say, curved in towards the axis 4, thereby increasing the aggressiveness of the cutting edges defined by the free sides 21 and facilitating the evacuation of the material removed from the partition 8 when the wall anchor according to the invention 1 is used to drill a hole therein by rotation on itself about its axis 4 with respect to the partition 8, under conditions which will be described hereinafter.

The arrangement and shaping of the teeth 18 constitute the only difference between the blank 3 of a wall anchor according to the invention 1 and the blank of a wall anchor according to FR-B 2 546 989 to which reference will be made elsewhere concerning the blank 3, except for the different number of bars 7 in the example illustrated.

As the work progresses on the blanks 3, this presence and shaping of the teeth 18 is manifested in the following manner :
- in an initial state in this regard, illustrated on a blank 3 located on the left in Figure 5, and while this blank is flat except that there have already been produced therein the teeth 13 of the collar 12, a smooth annular flange 44 of the collar 12, intended to lodge coaxially inside the head shaft 5, a similar annular flange 25 of the cap 16, intended to lodge coaxially inside the screw nut shaft 6 and having the coaxial internal thread 15 intended to co-operate with the screw rod 10 of the screw 11, the two teeth 18 are in the form of small triangular spurs disposed respectively on each side of the cap 16, in extension of each other, and pierced along their connection to the outer periphery 17 of the cap 16 by two respective circular holes 26 mutually juxtaposed along the periphery 17 and disposed symmetrically to one another with respect to a respective middle plane of symmetry of the two teeth 18 and further constituting the plane 24 of the wall anchor 1;
- in a following state of the blank 3, illustrated in the central portion of Figure 5, a plurality of rectilinear fold lines are provided on each of the teeth 18, one respective line 27 constituting approximately a tangent to the outer periphery 17 of the cap 16 and intended to form the side 20 for connection of the tooth 18 to the outer periphery 17, two respective lines 28 forming an isosceles triangle having a much smaller angle at the base than the angle at the vertex and joining each other in the plane 24, the lines 27 and 28 being disposed with respect to the holes 26 such that the line 27 intersects each of the holes 26 corresponding to the same tooth 18, but while remaining close to a position tangent to the hole 26, and each of the lines 28 intersects a respective one of the holes 26, while however maintaining a position close to a position tangent to the hole, and a line 29, which is disposed in the plane 24 and joins to the mutual connecting corner of the two free sides 21 of the corresponding tooth 18 the connection of the two lines 28 corresponding to the latter;
- then, as illustrated in the right-hand portion of Figure 5, folding over of the two teeth 18 along the respective line 27, over a little more than 90°, with respect to the collar 12, accompanied by forming along the respective lines 28 and 29 so as to impart to each of the teeth 18 the required concavity between its free sides 21, brings the mutual connecting corners of the latter into a position close to the axis 4, without the axis 4 being reached however.

It is only after the winding of the portions of the blank 3 corresponding to the head shaft 5, the screw nut shaft 6 and the bars 7 mutually connecting the shafts 5 and 6, and folding over of the collar 12 and of the cap 16 respectively on the head shaft 5 and on the screw nut shaft 6, in a respective orientation perpendicular to the axis 4, that an operation, not illustrated, of pinching the teeth 18 causes them to join each other, by the mutual connecting corners of the respective free sides 21, on the axis 4 to form the point 22.

It is moreover revealed by Figures 2 and 5 that in the collar 12 there is provided, from the arrangement of the flange 44 intended to border the coaxial passage 9, around this coaxial passage 9, an indentation for receiving a screwdriver, here a cross-recess, in the form of four notches 30, diametrically opposed in pairs, with respect to the axis 4 and disposed in respective middle planes not illustrated, including the axis 4 and disposed at 45° with respect to the planes 23 and 24.

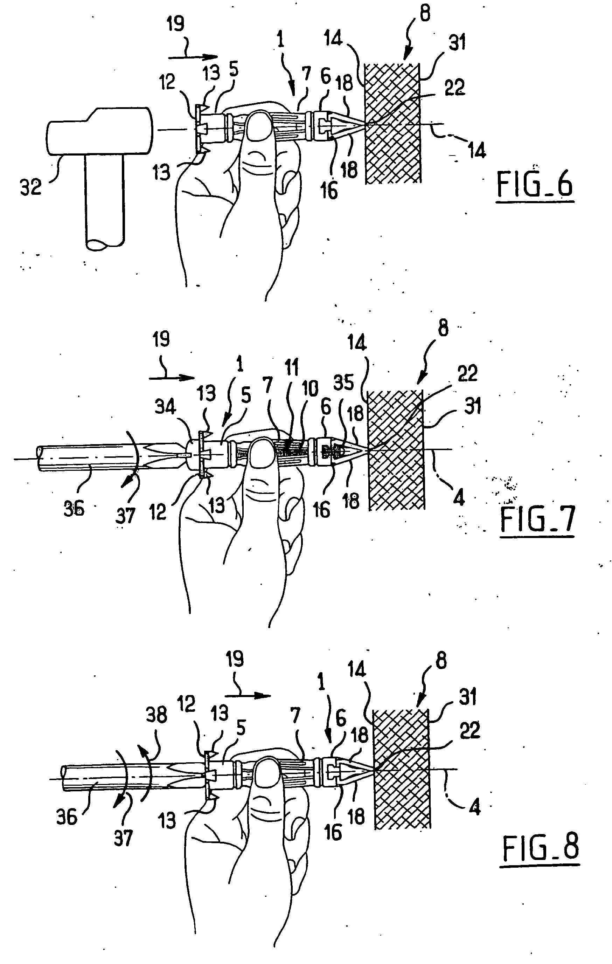

The wall anchor according to the invention 1 thus constituted, or constituted in an equivalent manner, may be used in different ways, which will now be described with reference to Figures 6 to 8 and then to Figures 9 to 11.

Figures 6 to 8 illustrate different possibilities for the use of a wall anchor 1 according to the invention for providing in the partition 8, starting from the face 14 of the latter, a hole 45 passing through the partition 8 from its face 14 to its opposite face 31 to receive the wall anchor 1 without play or practically without play, allowing it to pass through the partition 8 from side to side and allowing its anchorage by pinching of the partition 8 between the collar 12, bearing flat on the face 14, anchoring itself in the latter by means of the teeth 13, around the hole 45, and, if required, embedding itself in the face 14 until flush with it, and the bars 7 plastically deformed in a direction away from the axis 4 in order to bear on the face 31 of the partition 8 by bracing itself against the latter, under the same conditions as the wall anchors described in FR-B 2 546 989.

Figure 6 illustrates the use of the wall anchor 1 according to the invention like a nail, with respect to the partition 8.

With a view to such use, the axis 4 of the wall anchor 1 is oriented perpendicularly to the face 14 of the partition 8, and the point 22 of the wall anchor 1 is placed against the face 14, at a point at which it is intended that the centre of the mouth of the hole 45 to be formed in the face 14 is to coincide.

Holding the wall anchor 1 in one hand, for example at the level of the bars 7, in this position with respect to the partition 8, the collar 12 is struck in the direction 19, substantially along the axis 4, by means of a hammer 32 held in the other hand in order to cause progressive penetration of the wall anchor 1, first of all by its point 22 then by the screw nut shaft 6, the bars 7 and the head shaft 5, into the partition 8 through the face 14 of the latter. This progressive penetration, by perforating the partition 8 from one side to the other, brings about the formation of the hole 45 and ends when the collar 12 comes to bear flat against the face 14, anchoring itself in the latter by means of the teeth 13, or by embedding itself in the face 14 until flush with the latter, as shown in Figure 9. As when the wall anchors described in FR-B 2 546 989 are used, the wall anchor according to the invention 1 is selected such that, when the collar 12 thus rests flat on the face 14 or is flush with the latter, the bars 7 still in their initial configuration emerge from the hole 45, beyond the face 31 of the partition 8, over more than half their longitudinal dimension, remaining engaged in the hole 45 over less than half of the longitudinal dimension.

This method of providing the hole 45, like those which will be described with reference to Figures 7 and 8, of course ensures that the hole 45 is coaxial with the wall anchor 1, on the one hand, and that the transverse dimensions of the hole 45 are closely adapted to those of the wall anchor 1 on the other hand.

The mutual bearing, along the axis 4, of the mutual connecting corners of the free sides 21 of the two teeth 18, defining the point 22, ensures that the geometry of the latter is maintained throughout the formation of the hole 45, and the convexity given to each tooth 18 contributes thereto by stiffening the latter. In particular, the point 22 is kept identically in the position of the wall anchor 1 illustrated in Figure 9, that is to say, when the wall anchor has penetrated far enough into the hole 45 to support and anchor itself in the face 14 by the collar 12 and the teeth 13 of the latter.

Figures 7 and 8 themselves illustrate the provision of holes 45 by drilling by means of the wall anchor 1 previously placed with respect to the partition 8 in the relative position described with reference to Figure 6, drilling being effected by rotation of the wall anchor 1 on itself, about its axis 4, with respect to the partition 8.

In the method of use illustrated in Figure 7, the wall anchor 1 is associated for this purpose with a screw 11, the screw rod 10 of which, having the same axis 4 as the wall anchor 1, is engaged with the internal thread 15 of the screw nut shaft 6 and has two ends longitudinally opposed to each other, one end 33 bearing integrally a transverse head 34 then resting flat, in the direction 19, on the collar 12 around the passage 9 of the head shaft 5, and a free end 35 which is engaged in the coaxial internal thread 15 of the screw nut shaft 6 or, as illustrated, forms in the direction 19, with respect to the screw nut shaft 6 and the collar 12, a longitudinal projection of sufficiently small size for the free end 35 to be placed between the teeth 18 without applying any thrust to them which could cause them to move away from one another, and for example is not placed in contact with the teeth 18. The longitudinal dimensioning, for this purpose, of the rod 10 between its ends 33 and 35, depending on the longitudinal dimensions of the wall anchor, itself selected according to the thickness of the partition 8 between its faces 14 and 31, is within the normal capabilities of an expert in the field.

With the wall anchor being thus positioned by hand as described with reference to Figure 6, and bearing the screw 11 in the relative position which has just been described, there is engaged coaxially in the head 34 of the screw 11 a suitable screwdriver 36, which is rotated manually or electrically about the axis 4 in a circumferential direction 37 which, preferably, coincides with the direction of screwing of the screw rod 10 of the screw 11 into the internal thread 15 of the screw nut shaft 6. Owing to the head 34 bearing in the direction 19 against the collar 12, this rotation is manifested in an identical rotation of the assembly constituted by the screw 11 and the wall anchor 1 about the axis 4, with respect to the partition 8, and in the progressive drilling of the hole 45 in the latter by means of the cutting edges forming the free sides 21 of the teeth 18. The hole 45 obtained is identical to that described with reference to Figure 9, like the final relative position of the wall anchor 1 and of the partition 8. Once the collar 12 bears flat on the face 14 or is flush with the face 14 around the hole 45 and anchored in the face 14 by the teeth 13, the screw 11 can be unscrewed, thereby making it possible to obtain a result identical to what was described with reference to Figure 9.

It will be observed that the methods of use of the wall anchor according to the invention 1 which were described with reference to Figures 6 and 7 do not utilise the notches 30 provided for receiving a screwdriver around the coaxial passage 9 of the head shaft 5, in the collar 12, thus rendering the notches 30 optional.

On the other hand, the method of use illustrated in Figure 8 involves the presence of such notches 30 since, in the case of Figure 8, the wall anchor according to the invention 1 is used to drill the hole 45 by rotation about the axis 4 with respect to the partition 8, under conditions in this regard which are similar to those which were described with reference to Figure 7, but a screw 11 is not previously engaged in the wall anchor 1 and it is acted on directly, by means of the screwdriver 36 disposed coaxially with the wall anchor 1 and in engagement with the notches 30, to bring about the rotation of the wall anchor 1 about its axis 4 with respect to the partition 8 and the progressive drilling of the hole 45 in the latter. It will be observed that, in this case, the circumferential direction of rotation of the screwdriver 36 on itself about the axis 4, and of the rotation of the wall anchor 1 about its axis 4 by the screwdriver 36, may be the direction 37 corresponding to the screwing of a screw into the internal thread 15 of the screw nut shaft 6, or the opposite direction 38, in so far as the two sides 21 of each tooth 18 are in the shape of a cutting edge and may perform the same role of attack of the material constituting the partition 8.

In this case also, at the end of drilling of the hole 45 and of introduction of the wall anchor 1 into the latter, the wall anchor 1 is in the configuration and the position, with respect to the partition 8, described with reference to Figure 9.

Thus, whatever the method used for producing the hole 45 in the partition 8 and reaching the position described with reference to Figure 9, the wall anchor according to the invention 1 may then be used in the same manner, for example that which is illustrated in Figures 10 and 11, for anchoring an at least locally flat object 39 to the partition 8, with a locally flat zone 40 of the object 39 bearing flat against the face 14 of the partition 8.

The object 39 has been illustrated in the form of an angle iron in figures 10 and 11, and the locally flat zone 40 in the form of a limb of this angle iron, but no limitation should be deduced therefrom regarding the type of object capable of being anchored to the partition 8 by means of a wall anchor according to the invention 1 and of a suitable screw 11, the wall anchor according to the invention being capable of all the applications already known for the wall anchors described in FR-B 2 546 989.

The flat zone 40 having two flat faces 42, 43, parallel and mutually opposed, and being traversed from one to the other of these faces 42 and 43 by a hole 41 disposed along an axis which is perpendicular to them and which is intended to coincide with the axis 4 common to the wall anchor 1 and the hole 45, the through hole 41 having a diameter intermediate between the respective diameters of the screw rod 10 of the screw 11 and the head 34 of the latter, the flat portion 40 of the object 39 is placed with its face 42 flat against the face 14 of the partition 8 by way of the collar 12 or against the collar 12 and the face 14 around the collar 12, causing the axis, with no reference number, of the hole 41 to coincide with the axis 4. Then, as shown in Figure 10, there is engaged coaxially in the hole 41, through the face 43 of the flat zone 40, the free end 35 of the screw rod 10 of the screw 11, then, by a movement of the screw 11 in the direction 19, the screw rod 10 is passed through the flat zone 40, from one side to the other, through the hole 41, then the head shaft 5 and the assembly constituted by the limbs 7, coaxially, until the screw rod 10 comes into contact, with its free end 35, with the internal thread 15 of the screw nut shaft 6, with which the screw rod 10 is brought into screwing engagement by rotation in the appropriate direction 37 with respect to the wall anchor 1, by the action of a coaxial screwdriver 36 on the head 34 of the screw 11. The screw 11, which may be different from that described with reference to Figure 7, has between the ends 35 and 33 of its screw rod 10 dimensions such that the head 34 then bears flat on the face 43 of the flat zone of the object 39 around the hole 41, or is placed overhanging by a certain longitudinal dimension with respect to the face 43 of the object 39.

Then, the screwing of the screw rod 10 of the screw 11 into the internal thread 15 of the screw nut shaft 6 is continued by continuing the rotation of the screwdriver 36 in the direction 37 about the axis 4, until the head 34 comes to bear flat on the face 43 around the hole 41 if such was not yet the case, then in such a way as to bring the screw nut shaft 6 longitudinally closer to the head shaft 5, against which the head 34 bears longitudinally in the direction 19 by way of the flat zone 40 of the object 39 and the collar 12, thereby bringing about the deformation of the bars 7 in a direction away from the axis 4 and the bearing of a portion of the bars 7 flat on the face 31 of the partition 8 around the hole 45, as shown in Figure 11, under the same conditions as when the wall anchors described in FR-B 2 546 989 are used.

As the screwing of the screw rod 10 of the screw 11 into the internal thread 15 of the screw nut shaft 6 proceeds, the free end 35 of the screw rod 10 forms a larger and larger longitudinal projection, in the direction 19, with respect to the screw nut shaft 6 and to the cap 16, and thus comes into contact with the teeth 18, which it causes the gradual separation of by plastic deformation at the respective side 20 for connection to the cap 16, in the manner of a pivoting movement with respect to the cap 16 about an axis approximately defined by the respective connection side 20.

Thus, when the wall anchor 1 reaches its configuration for anchoring in the partition 8, illustrated in Figure 11, the teeth 16 are moved away from the axis 4, that is to say, away from one another perpendicularly to the axis 4, to which they may for example be approximately parallel, as is illustrated.

For reasons of transmission of force, easily understood by an expert in the field, the connection of the teeth 18, along their respective side 20, to the cap 16 may offer little resistance to this relative movement away under the thrust of the free end 35 of the screw rod 10 of the screw 11, while when the teeth 18 occupy their relative position defining the point 22, the latter may have sufficient rigidity to maintain its geometry in the presence of the reaction which the partition 8 offers to the penetration of the wall anchor 1 in the direction 19.

Once the position, described with reference to Figure 9, of the wall anchor according to the invention 1 with respect to the partition 8 has been reached, of course, the continuance of the setting of the wall anchor 1, that is to say in particular the deformation of its bars 7 in the direction of anchorage in the partition 8, illustrated in Figure 11, may take place in a different manner from that which has just been described with reference to Figures 10 and 11. Thus it is possible in particular to use for this purpose, in the absence of the screw 11, a tool well known per se, used for the setting and anchoring of the wall anchors described in FR-B 2 546 989, or to use the screw 11 for this purpose in the manner described with reference to Figures 10 and 11 but without inserting anything between its head 34 and the collar 12 of the wall anchor 1, against which the head 34 thus bears directly in the direction 19 during the rotation of the screw 11 in the direction 37 by means of the screwdriver 36 in order to bring the screw nut shaft 6 closer to the head shaft 5 and thus cause plastic flexing of the bars 7 in a direction away from the axis 4, in order to reach the anchoring configuration illustrated in Figure 11. Then, having in the latter case unscrewed the screw 11 which served for the deformation of the bars 7, the object 39 can be fixed to the partition 8, by means of the wall anchor according to the invention 1, using for this purpose a screw 11 which may be identical to that which may have been used for the deformation of the wall anchor 1, or may be different therefrom.

An expert in the field will easily understand that, although the present invention, in particular the teeth 18 characteristic thereof, has been described in association with a wall anchor otherwise essentially conforming to the teachings of FR-B 2 546 989, the arrangements characteristic of the present invention would be compatible with any other design of wall anchor capable of anchoring itself in a similar manner to a partition and that, in particular the precise geometric shape of the bars 7 is irrespective with regard to the present invention, like the method of manufacture of the wall anchor 1, although the method of production described, in one piece starting from a metal strip, constitutes a currently preferred embodiment.

Similarly, an expert in the field will easily understand that, although a number and a currently preferred configuration of the teeth 18 have been described, other numbers and/or configurations could also be selected satisfactorily, without thereby departing from the framework of the present invention.

## Claims

1. A wall anchor for a screw (11), of the type having a longitudinal axis (4) and comprising, integrally:
two shafts (5, 6) having a respective generally tubular form of revolution about the axis (4) and mutually opposed longitudinally, in the form of:
a head shaft (5) bounding internally a free coaxial passage for a screw rod (10) of the screw (11) and bearing externally a transverse, longitudinally end, collar (12); and
a screw nut shaft (6) having on the inside a coaxial internal screw thread (15) capable of co-operating with said screw rod (10) and bearing at its outer periphery a plurality of longitudinally end, approximately longitudinal, teeth (18) distributed angularly about the axis (4) and forming a longitudinal projection with respect to the screw nut shaft (6), longitudinally opposite to the head shaft (5) with respect to the screw nut shaft (6), wherein each tooth (18) converges towards the axis (4), in a longitudinal direction (19) going from the head shaft (5) towards the screw nut shaft (6), and has a generally triangular shape defined by a side (20) for connection to the screw nut shaft (6) and by two free sides (21), such that the teeth (18) together define a point (22) symmetrical with respect to the axis (4), projecting longitudinally on the screw nut shaft (6) in said longitudinal direction (19); and
a plurality of approximately longitudinal small bars (7) distributed angularly about the axis (4) disposed between the head shaft and screw nut shaft (5, 6), which they mutually connect, and plastically flexible in a direction away from the axis (4), in order to pass from an initial configuration to an anchoring configuration of the wall anchor (1),
**characterised in that** the wall anchor is made of pressed metal strip and **in that** each tooth (18) is concave between said free sides (21) whereby each tooth is curved towards the axis (4).

2. A wall anchor according to claim 1, **characterised in that** the teeth (18) are identical to one another.

3. A wall anchor according to either one of claims 1 or 2, **characterised in that** the teeth (18) are regularly distributed angularly about the axis (4).

4. A wall anchor according to any one of the previous claims, **characterised in that** the small bars (7) are identical to one another.

5. A wall anchor according to any one of the previous claims, **characterised in that** the small bars (7) are regularly distributed angularly about the axis (4).

6. A wall anchor according to any one of the previous claims, **characterised in that** said side (20) for connection of each tooth (18) to the screw nut shaft (6) constitutes a privileged zone of flexing by plastic deformation, such that each tooth (18) is capable of pivoting about said respective connection side (20), with respect to the screw nut shaft (6), in a direction away from the axis (4), in particular under a thrust exerted by the screw rod (10) of the screw (11) in said longitudinal direction (19).

7. A wall anchor according to any one of the previous claims, **characterised in that** at least one of said free sides (21) of each tooth (18), turned in a specific circumferential direction (37), identical from one tooth (18) to the other, is in the form of a cutting edge.

8. A wall anchor according to claim 7, **characterised in that** the two free sides (21) of each tooth (18) are in the respective shape of a cutting edge.

9. A wall anchor according to either one of claims 7 and 8, **characterised in that** the head shaft (5) has an indentation (30) for co-operating with a screwdriver (36) around said free coaxial passage (9).

10. A wall anchor according to any one of the previous claims, **characterised in that** each tooth (18) is produced in one piece with the screw nut shaft (6).

11. A wall anchor according to claim 10, **characterised in that** it is formed at least essentially from a single pressed metal strip (2).

12. An assembly constituted by a wall anchor (1) according to any one of claims 1 to 11, and a screw (11), including a transverse head (34) capable of bearing against the collar (12) of the head shaft (5) in said longitudinal direction (19) and a longitudinal screw rod (10) having an end (33) for rigid connection to said head (34) and a free end (35) longitudinally opposed to said head (34) and capable of freely traversing, coaxially, the passage (9) of the head shaft (5) and of co-operating with the internal thread (15) of the screw nut shaft (6),
**characterised in that** the screw rod (10) has between said ends (33, 35) a longitudinal dimension such that its free end (35) is accommodated between the teeth (18) of the screw nut shaft (6), or set back longitudinally with respect to the latter but in engagement with the internal thread (15) of the screw nut shaft (6), when the head (34) of the screw (11) bears against the collar (12) of the head shaft (5) in said initial configuration.

## Patentansprüche

1. Wanddübel des eine Längsachse (4) aufweisenden Typs für eine Schraube (11), der integral aufweist:
zwei Schäfte (5, 6), die jeweils eine allgemein rohrförmige Form einer Umdrehung um eine Achse (4) haben und einander in Längsrichtung gegenüberliegen, in Form
eines Kopfschaftes (5), der im Inneren einen freien koaxialen Kanal für einen Schraubenschaft (10) der Schraube (11) begrenzt und am äußeren Längsende einen Querkragen (12) trägt, und
eines Schraubenmutterschaftes (6), der im Inneren ein koaxiales Innengewinde (15) hat, das mit dem Schraubenschaft (10) zusammenwirken kann, und der an seinem äußeren Umfang mehrere in Längsrichtung endende, in etwa in Längsrichtung verlaufende Zähne (18) trägt, die um die Achse (4) verteilt sind und bezüglich dem Schraubenmutterschaft (6) einen länglichen Vorsprung bilden und in Längsrichtung bezüglich dem Schraubenmutterschaft (6) gegenüber dem Kopfschaft (5) liegen, wobei jeder Zahn (18) in Längsrichtung (19) vom Kopfschaft (5) in Richtung auf den Schraubenmutterschaft (6) zur Achse (4) konvergiert und im Allgemeinen Rechteckform hat, die durch eine Seite (20) zur Verbindung mit dem Schraubenmutterschaft (6) und durch zwei freie Seiten (21) gebildet ist, so dass die Zähne (18) zusammen eine bezüglich der Achse (4) symmetrische, in Längsrichtung am Schraubenmutterschaft (6) in dieser Längsrichtung (19) vorstehende Spitze (22) bilden, und
mehrerer in etwa länglicher kleiner Streben (7), die um die Achse (4) in Umfangsrichtung verteilt zwischen dem Kopfschaft (5) und dem Schraubenmutterschaft (6) vorgesehen sind, die sie miteinander verbinden, wobei sie in Richtung weg von der Achse plastisch verformbar sind, um von einer Anfangsform in eine Verankerungsform des Wanddübels (1) überzugehen,
**dadurch gekennzeichnet, dass** der Wanddübel aus einem gestanzten Metallstreifen hergestellt ist und dass jeder Zahn (18) zwischen seinen freien Seiten (21) konkav ist, wodurch jeder Zahn zur Achse (4) gekrümmt ist.

2. Wanddübel nach Anspruch 1, **dadurch gekennzeichnet, dass** die Zähne (18) identisch sind.

3. Wanddübel nach Anspruch 1 oder 2, **dadurch gekennzeichnet, dass** die Zähne (18) gleichmäßig um die Achse (4) verteilt sind.

4. Wanddübel nach einem der vorhergehenden Ansprüche, **dadurch gekennzeichnet, dass** die kleinen Streben (7) identisch sind.

5. Wanddübel nach einem der vorhergehenden Ansprüche, **dadurch gekennzeichnet, dass** die kleinen Streben (7) gleichmäßig um die Achse (4) verteilt sind.

6. Wanddübel nach einem der vorhergehenden Ansprüche, **dadurch gekennzeichnet, dass** die Seite (20) zur Verbindung jedes Zahns (18) mit dem Schraubenmutterschaft (6) eine bevorzugte Zone bei der Verbiegung durch plastische Verformung ist, so dass jeder Zahn (18), insbesondere unter einem durch den vom Schraubenschaft (10) der Schraube (11) in der Längsrichtung (19) ausgeübten Druck, bezüglich dem Schraubenmutterschaft (6) in einer Richtung weg von der Achse (4) um die jeweilige Verbindungsseite (20) schwenken kann.

7. Wanddübel nach einem der vorhergehenden Ansprüche, **dadurch gekennzeichnet, dass** zumindest eine der freien Seiten (21) jedes Zahns (18), die in einer speziellen Umfangsrichtung (37) gesehen sind und für jeden der Zähne (18) identisch sind, die Form einer Schneidkante hat.

8. Wanddübel nach Anspruch 7, **dadurch gekennzeichnet, dass** die beiden freien Seiten (21) jedes Zahns (18) die Form einer Schneidkante haben.

9. Wanddübel nach Anspruch 7 oder 8, **dadurch gekennzeichnet, dass** der Kopfschaft (5) eine Vertiefung (30) für das Zusammenwirken mit einem Schraubendreher (36) um den freien, koaxialen Kanal (9) hat.

10. Wanddübel nach einem der vorhergehenden Ansprüche, **dadurch gekennzeichnet, dass** jeder Zahn (18) einstückig mit dem Schraubenmutterschaft (6) hergestellt wird.

11. Wanddübel nach Anspruch 10, **dadurch gekennzeichnet, dass** er zumindest im Wesentlichen aus einem einzigen gestanzten Metallstreifen (2) hergestellt ist.

12. Anordnung aus einem Wanddübel (1) gemäß einem der Ansprüche 1 bis 11 und einer Schraube (11), die einen zur Anlage am Kragen (12) des Kopfschaftes (5) in Längsrichtung (19) geeigneten Kopf (34) und einen länglichen Schraubenschaft (10) mit einem Ende (33) zur starren Verbindung mit dem Kopf (34) und einem dem Kopf (34) in Längsrichtung gegenüberliegenden freien Ende (35) hat, der zum freien koaxialen Durchtritt durch den Kanal (9) des Kopfschaftes (5) und zum Zusammenwirken mit dem Innengewinde (15) des Schraubenmutterschaftes (6) geeignet ist,
**dadurch gekennzeichnet, dass** der Schraubenschaft (10) zwischen seinen Enden (33, 35) eine Längsabmessung hat, so dass sein freies Ende (35) zwischen die Zähne (18) des Schraubenmutterschaftes (6) passt oder in Längsrichtung bezüglich diesen zurückversetzt ist, jedoch in Eingriff mit dem Innengewinde (15) des Schraubenmutterschaftes (6) steht, wenn der Kopf (34) der Schraube (11) in der Anfangsform am Kragen (12) des Kopfschaftes (5) anliegt.

## Revendications

1. Ancre de mur pour une vis (11), du type ayant un axe longitudinal (4) et comprenant, intégralement :
deux arbres (5, 6) ayant une forme de révolution respective généralement tubulaire autour de l'axe (4) et mutuellement opposés longitudinalement, sous la forme de :
un arbre de tête (5) contenant intérieurement un passage coaxial libre pour une tige de vis (10) de la vis (11) et portant extérieurement un épaulement transversal d'extrémité longitudinale (12) ; et
un arbre d'écrou (6) ayant sur l'intérieur un filetage de vis interne coaxial (15) capable de coopérer avec ladite tige de vis (10) et portant au niveau de sa périphérie extérieure une pluralité de dents d'extrémité longitudinale approximativement longitudinales (18) distribuées de manière angulaire autour de l'axe (4) et formant une saillie longitudinale par rapport à l'arbre de l'écrou (6), de manière longitudinalement opposée à l'arbre de tête (5) par rapport à l'arbre de l'écrou (6), dans laquelle chaque dent (18) converge vers l'axe (4) dans une direction longitudinale (19) partant de l'arbre de tête (5) vers l'arbre de l'écrou (6) et a une forme généralement triangulaire définie par un côté (20) pour une connexion à l'arbre de l'écrou (6) et par deux côtés libres (21), de sorte que les dents (18) définissent ensemble une pointe (22) symétrique par rapport à l'axe (4), faisant saillie longitudinalement sur l'arbre de l'écrou (6) dans ladite direction longitudinale (19) ; et
une pluralité de petites barres approximativement longitudinales (7) distribuées de manière angulaire autour de l'axe (4) disposées entre l'arbre de tête et l'arbre de l'écrou (5, 6), qu'elles connectent mutuellement, et flexibles sur le plan plastique dans une direction à l'écart de l'axe (4), afin de passer d'une configuration initiale à une configuration d'ancrage de l'ancre de mur (1),
**caractérisée en ce que** l'ancre de mur est fabriquée dans une bande de métal pressé et **en ce que** chaque dent (18) est concave entre lesdits côtés libres (21), moyennant quoi chaque dent est courbée vers l'axe (4).

2. Ancre de mur selon la revendication 1, **caractérisée en ce que** les dents (18) sont identiques les unes aux autres.

3. Ancre de mur selon l'une ou l'autre des revendications 1 ou 2 **caractérisée en ce que** les dents (18) sont régulièrement distribuées de manière angulaire autour de l'axe (4).

4. Ancre de mur selon l'une quelconque des revendications précédentes, **caractérisée en ce que** les petites barres (7) sont identiques les unes aux autres.

5. Ancre de mur selon l'une quelconque des revendications précédentes, **caractérisée en ce que** les petites barres (7) sont régulièrement distribuées de manière angulaire autour de l'axe (4).

6. Ancre de mur selon l'une quelconque des revendications précédentes, **caractérisée en ce que** ledit côté (20) pour une connexion de chaque dent (18) à l'arbre de l'écrou (6) constitue une zone privilégiée de fléchissement par déformation plastique, de sorte que chaque dent (18) est capable de pivoter autour dudit côté de connexion respectif (20), par rapport à l'arbre de l'écrou (6), dans une direction à l'écart de l'axe (4), en particulier au cours d'une poussée exercée par la tige de vis (10) de la vis (11) dans ladite direction longitudinale (19).

7. Ancre de mur selon l'une quelconque des revendications précédentes, **caractérisée en ce qu'**au moins un desdits côtés libres (21) de chaque dent (18), tourné dans une direction circonférentielle spécifique (37), identique d'une dent (18) à l'autre, a la forme d'un bord tranchant.

8. Ancre de mur selon la revendication 7, **caractérisée en ce que** les deux côtés libres (21) de chaque dent (18) ont la forme respective d'un bord tranchant.

9. Ancre de mur selon l'une ou l'autre des revendications 7 et 8, **caractérisée en ce que** l'arbre de tête (5) a une indentation (30) pour coopérer avec un tournevis (36) autour dudit passage coaxial libre (9).

10. Ancre de mur selon l'une quelconque des revendications précédentes, **caractérisée en ce que** chaque dent (18) est produite d'une seule pièce avec l'arbre de l'écrou (6).

11. Ancre de mur selon la revendication 10, **caractérisée en ce qu'**elle est formée au moins substantiellement d'une seule bande de métal pressé (2).

12. Ensemble constitué d'une ancre de mur (1) selon l'une quelconque des revendications 1 à 11, et d'une vis (11) comprenant une tête transversale (34) capable de s'appuyer contre l'épaulement (12) de l'arbre de tête (5) dans ladite direction longitudinale (19) et une tige de vis longitudinale (10) ayant une extrémité (33) pour une connexion rigide à ladite tête (34) et une extrémité libre (35) opposée longitudinalement à ladite tête (34) et capable de traverser librement, coaxialement, le passage (9) de l'arbre de tête (5) et de coopérer avec le filetage interne (15) de l'arbre de l'écrou (6),
**caractérisé en ce que** la tige de vis (10) a entre lesdites extrémités (33, 35) une dimension longitudinale telle que son extrémité libre (35) est logée entre les dents (18) de l'arbre de l'écrou (6), ou en arrière dans le sens longitudinal par rapport à ce dernier mais en prise avec le filetage interne (15) de l'arbre de l'écrou (6), lorsque la tête (34) de la vis (11) s'appuie contre l'épaulement (12) de l'arbre de tête (5) dans ladite configuration initiale.
